# EUROPEAN PATENT SPECIFICATION

(11) **EP 0 308 458 B1**
(45) Date of publication and mention of the grant of the patent: **24.02.1993**
(21) Application number: 88902892.4
(22) Date of filing: 30.03.1988
(51) Int. Cl.: B65D 90/06, B62D 25/20

(54) **FLOOR PANEL FOR A CONTAINER**
BODEN FÜR EINEN CONTAINER
PANNEAU DE SOL POUR CONTENEUR

(30) Priority: 03.04.1987 GB 8708045
(43) Date of publication of application: 29.03.1989
(73) Proprietor: SEA CONTAINERS LTD, Hamilton 5, Bermuda (GB)
(72) Inventor: COLEBROOK, David, Guildford Surrey (GB)
(74) Representative: Baillie, Iain Cameron
(86) International application number: GB8800246
(87) International publication number: WO8807485

(56) References cited:
- DE-B- 1 273 426
- FR-A- 1 604 985
- GB-A- 2 172 979
- US-A- 4 380 300

## Description

This invention relates to a floor panel for a transportable cargo container such as a refrigerated container. Such containers are usually of an elongate rectangular configuration made of metal and plastics material with standard ISO couplings at castings at each corner of the structure to enable the structure to be lifted when fully loaded or empty. The containers usually have a length of some 20 or 40 feet (6.09 of 12.19 metres).

These containers are often moved by fork lift trucks which carelessly used cause damage to the underside of the containers such as piercing the container flooring or bending the bearer or cross beam members if the container is lowered onto uneven ground or the bearer member coincides with a brick or sharp obstruction. Such a transportable cargo container is shown in US Patent No. 4380300 to Mountz et al in which extended floor panels are supported on cross-beam members and an outer bottom wall extends across and beneath the cross-beam members to sandwich the cross-beam members therebetween to protect the cross-beam members. Whilst such a container is strong it is extremely heavy but has little or no insulating properties. The preamble of claim 1 is based on this prior art.

In known refrigerated containers of this type foam is used extensively for insulation properties and the flooring of such containers comprises a plurality of bearing members of I or Z shaped cross-section extending across the width of the rectangular floor panel. A steel underpan is fixed above the bearer members whilst the container flooring surface comprises a plurality of extruded aluminium sheets butt welded together with each sheet having a plurality of closely spaced elongate members of T-shaped cross-section. A space existing between the underpan and extruded sheet flooring is filled with foam to give the required insulation properties to the floor area of the container.

Goods to be stored within the container are located on the elongate flooring members and coolant gases are fed along the spaces between the flooring members to refrigerate the goods within the container. The I-shaped bearer members are closely spaced and are of a sufficient width to receive a tine tunnel therebetween. Two or more such tine tunnels are provided along the length of the container. However, distortion of the cross-beam members remains a serious problem.

Moreover, the flooring having this construction is disadvantageous in that it is exceptionally heavy in view of the number of I or Z shaped bearer members and efforts have been made to overcome this problem by constructing strong load bearing flooring panels without the need for bearing members on the container so that when placed upon the ground any obstruction would be located within the space between the underpan and the bottom edge of the container. In one known attempt to overcome this problem the steel underpan has a plurality of corrugations extending widthwise of the flooring panel. An elongate timber support is located at each end of the elongate flooring panel and at the centre thereof to support the extruded aluminium flooring. Between the extruded aluminium flooring and the underpan is injected foam having a density of 80 Kg/m.

This bearer-less floor panel is simpler than the above described conventional panel but has the disadvantage that the steel underpan must be corrugated to provide the necessary structural support thus reducing insulation properties of the flooring panel. Alternatively, the insulating properties of the floor may be maintained by spacing the corrugated underpan further from the flooring surface at a lower level, closer to corner casting level of the container. However, this renders the underpan more susceptible to damage when the container is placed on uneven ground. Furthermore, to ensure the required strength is achieved, the steel underpan must be of a thickness of 2mm making the quite heavy.

With these structures in mind a particularly relevant known refrigerated container is disclosed in published British Patent Specification No. 2172979A. Here there is disclosed a floor structure having an underpan of sheet plywood and a layer of GRP, a floor of plywood and a filling therebetween of low density foam with high density foam at the edges for supporting the side walls of the container. Such container is primarily used as a vehicle body mounted on a chassis which provides support for the floor in use. Without the chassis support such container would not be sufficiently strong to support the usual loading capacity of a transportable cargo container.

Other fixed type containers such as that disclosed in DE-AS-1273426 have multi-layered underpans and foam filling which rest on the ground but these are just for insulating properties.

It is an object of the present invention to provide a bearer-less floor panel structure for a transportable cargo container in which the weight of the floor panel is substantially reduced and the insulation value is simultaneously increased. Also, the underpan is protected from damage by being located well above the bearing level of the corner castings.

According to one aspect of the present invention there is provided a floor structure for transportable cargo containers including an underpan arranged to extend across the width of the lower panel, extruded sheet flooring plates located above and at a distance from said underpan to define a space therebetween, characterised in that the underpan is a substantially planar single sheet material unsupported on the side thereof remote from the flooring plates, and in that a high density foam is completely filling the space between the flooring plates and the underpan.

In one preferred embodiment of a container according to the present invention elongate bearer blocks are located between the underpan and the sheet flooring plates to support the latter in spaced relationship to the underpan. Preferably, the support blocks divide the space between the steel underpan and the extruded sheet flooring plates into a plurality of compartments each separately injection filled with high density foam. Conveniently the support blocks are elongate blocks of high density foam.

The underpan is preferably of stainless steel and is spaced from the flooring sheets by a constant amount other than in the region of tine tunnels. Conveniently the underpan is shaped around the tine tunnels with a rectangular recess for receiving complimentary shaped tine tunnels.

According to another aspect of the present invention there is provided a transportable cargo container including a bearer-less floor panel structure as claimed in claim 1.

Surprisingly, the provision of a layer of high density foam of substantially constant thickness sandwiched between flooring sheets and a planar underpan provide a flooring panel of sufficient rigidity and support that enables the thickness of the underpan to be reduced to 1mm or less resulting in a bearer-less flooring panel which is considerably lighter than known bearer-less flooring panels for containers, and refrigerated containers in particular.

An embodiment of the present invention will now be described by way of example with reference to the accompanying drawings in which:-
Fig. 1 is a side elevational view of a flooring panel according to the present invention;
Fig. 2 is a partial end elevational view of the flooring panel of Fig. 1; and
Fig. 3 is an enlarged partial elevational view of the left hand end of the drawing shown in Fig. 2.

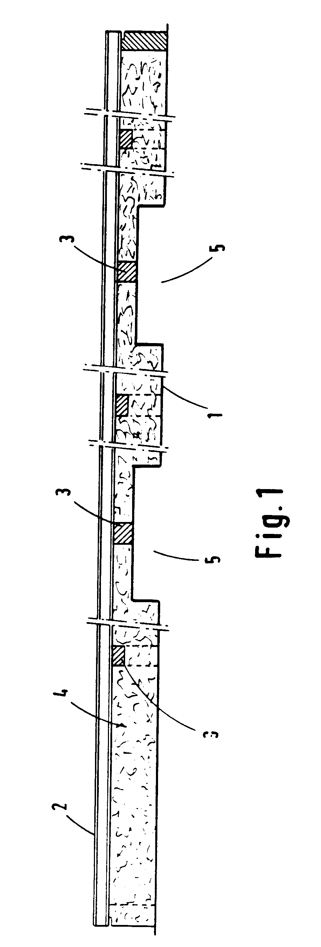

Referring more specifically to the drawings, Fig. 1 shows a flooring panel which is of an elongate rectangular configuration having a substantially planar underpan 1 above which is located a sheet flooring plate 2. The plate 2 is spaced from the underpan 1 by a plurality of support blocks 3. The space between the underpan and flooring sheets is filled with foam 4.

The underpan 1 is substantially planar having recesses 5 for location over tine tunnels (not shown) fixedly mounted between lower side frame members of the container. The underplan 1 is made of muffler grade (3CR12) stainless steel and is 1mm thick.

The sheen flooring plate 2 comprises a plurality of extruded sections each having four elongate laterally spaced flooring planks with a T-shaped cross -section being integrally formed with said aluminium sheets, the spacing between the flooring planks allowing the passage of coolant therebetween. A plurality of such sheets are butt-welded together to form a one piece flooring plate.

The blocks 3 located between the underpan and the floor are elongate rectangular blocks of 80 Kg⁻³ block foam. The blocks 3 extend from one side of the flooring panel to the other and divide the space between the underpan 1 and T-flooring 2 into a series of compartments which are effectively sealed by the bonding of the blocks to both the underpan and T-floor. Each of the compartments is filled with foam injected into the compartments the foam being polyurethanefoam having a density of 80 to 90 kg.m³. A bonding agent (not shown) is used with the foam to ensure a goodbond between the underpan and the T-flooring 2.

The bonding of the blocks 3 to the underpan 1 and T-flooring plate 2 is effected with an adhesive such as Sifaflex 11 FC. Furthermore, whilst seven foam blocks are shown in Fig. 1 the exact number and location of such blocks is variable but must include at least three, one at each end and one centrally between the ends.

The supporting blocks at each end of the flooring panel are preferably of soft wood bonded top and bottom with adhesive to the T-flooring and underpan respectively. A 20 x 4mm slot is provided in the uppermost surface of the softwood.

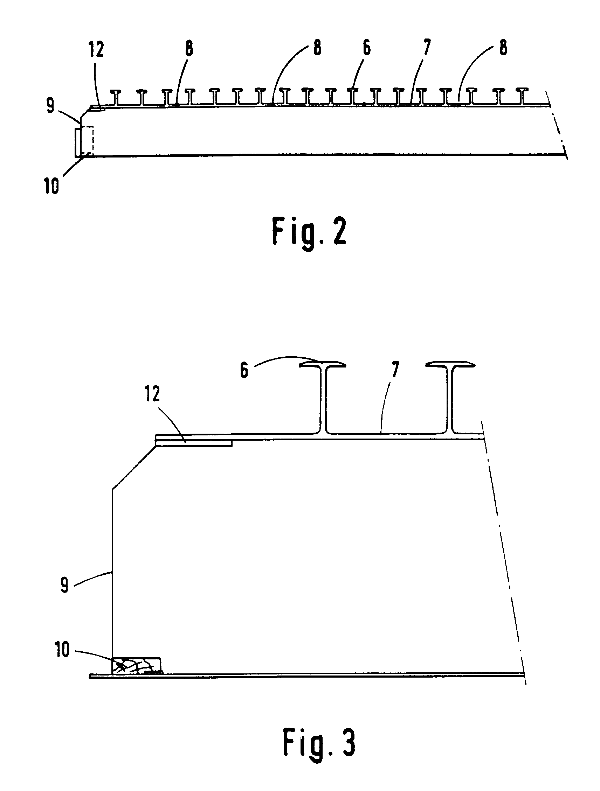

The T-shaped flooring 2 is more clearly shown in Figs. 2 and 3 in which T-shaped elements 6 are shown to be integral with sheets 7, there being four such elements 6 to each extruded sheet which are butt-welded at 8. Foam side edges 9 of the floor panel are vapour sealed whilst at the bottom left hand side of the edge 9 is a locating block 10 of softwood which is adhesively bonded to the underpan and serves for positioning purposes only during the manufacture of a bearer-less floor panel. A metal strip 12 is welded to the undersurface of the side edge of the T-flooring 2 to act as a heat barrier to ensure no foam damage on welding.

The manufacture of the bearer-less flooring panel is achieved by placing a stainless steel urderpan on the bed of a hydraulic press and then positioning the spacer blocks 3 on the underpan. A pre-butt welded sheet of T-flooring is then located and bonded to the spacer blocks 3 above the underpan 1. The hydraulic press is then brought to bear down upon the T-flooring whilst simultaneously foam is pumped into the compartments defined between the blocks 3. The side edge 9 of each floor panel is formed by pre-shaped molding blocks (not shown) positioned on the edge of the underpan.

Therefore, there has been described a bearer-less flooring panel for a refrigerated container in which the thickness of the underpan has been reduced by 50 percent with a corresponding saving in weight whilst the insulating properties of the flooring have been greatly improved by the constant thickness of the foam between the underpan and T-flooring which foam also adds to the strength of the flooring.

In use the flooring panel is mounted inside a container with the recesses 5 located over tine tunnels fixed in the container and with the edges of the bearer-less flooring located on and welded to a support lip extending inwardly of the container. In the final form of the container any gaps between the side walls of the container and the flooring panel are filled with foam so as to provide a constant flooring level throughout the container.

A preferred form of foam for use with the flooring panel of the present invention is Isofoam DP8113 The foam has a strength of 6.15 to 9.5kg/sq.cm which is adequate for the maximum working loads at the edges of the flooring panel.

As with conventional containers, the containers according to the present invention are produced from a combination of steel, aluminium and plastics materials.

## Claims

1. A bearer-less floor panel structure for a transportable cargo container comprising an underpan (1) arranged to extend across the width of the floor panel, extruded sheet flooring plates (2) located above and at a distance from said underpan to define a space therebetween, characterised in that the underpan (1) is a substantially planar single sheet material unsupported on the side thereof remote from the flooring plates, and in that a high density foam is completely filling the space between the flooring plates (2) and the underpan (1).

2. A floor panel as claimed in claim 1, characterised in elongate high density spacer blocks (3) located between the under pan (1) and the sheet flooring plates (2) to support the latter in spaced relationship to the underpan during filling of the said space with high density foam (4), the spacer blocks dividing the space between the underpan and the extruded sheet flooring plates into a plurality of compartments each separately injection filled with the high density foam.

3. A floor panel as claimed in claim 1 or 2, characterised in that-the underpan (1) is of stainless steel and is spaced from the flooring plates (2) by a constant amount other than in the region of tine tunnels (5).

4. A floor panel as claimed in claim 3, characterised in the underpan (1) being shaped around the tine tunnels with a rectangular recess for receiving complementary shaped tine tunnels.

5. A floor panel as claimed in anyone of the preceding claims, characterised in the thickness of the underpan is 1 mm or less.

6. A floor panel as claimed in anyone of the preceding claims, characterised in the high density foam is ISO foam DP8113 having a strength of 6.15 to 9.5 kg/sq.cm.

7. A transportable cargo container characterised in bearer-less floor panel structure as claimed in claim 1.

## Patentansprüche

1. Trägerlose Bodenplattenkonstruktion für einen transportablen Frachtgutcontainer, die eine quer über die Breite der Bodenplatte sich erstreckend angeordnete Unterwanne (1) aufweist, Bodenplatten (2) aus Profilblech, die oberhalb und in einem Abstand zur Unterwanne angeordnet sind, um einen Zwischenraum festzulegen,
dadurch gekennzeichnet, daß die Unterwanne (1) ein im wesentlichen ebenes, einteiliges, an seiner den Bodenplatten abgelegenen Seite nicht aufliegendes Blechmaterial ist und daß ein Schaumstoff mit hoher Dichte den Zwischenraum zwischen den Bodenplatten (2) und der Unterwanne (1) vollständig ausfüllt.

2. Bodenplatte nach Anspruch 1, gekennzeichnet durch langgestreckte Zwischenblöcke (3) mit hoher Dichte, die zwischen der Unterwanne (1) und den Bodenblechplatten (2) zum Halten der letzteren in einer beabstandeten Beziehung zur Unterwanne während des Ausfüllens des Zwischenraums mit Schaumstoff (4) hoher Dichte angeordnet sind, wobei die Zwischenblöcke den Zwischenraum zwischen der Unterwanne und den Bodenplatten aus Profilblech in eine vielzahl von Kammern unterteilen, von denen jede getrennt mit Schaumstoff hoher Dichte einspritzgefüllt ist.

3. Bodenplatte nach Anspruch 1 oder 2, dadurch gekennzeichnet, daß die Unterwanne (1) aus rostfreiem Stahl besteht und von den Bodenplatten (2) durch einen konstanten anderen Betrag als in dem Bereich des Zinkenkanäle (5) beabstandet ist.

4. Bodenplatte nach Anspruch 3, gekennzeichnet durch die Unterwanne (1), die um die Zinkenkanäle herum mit einer rechteckigen Aussparung zur Aufnahme Komplementär geformter Zinkenkanäle geformt ist.

5. Bodenplatte nach einem der vorstehenden Ansprüche, dadurch gekennzeichnet, daß die Unterwanne eine Dicke von 1 mm oder weniger hat.

6. Bodenplatte nach einem der vorstehenden Ansprüche, dadurch gekennzeichnet, daß der Schaumstoff mit hoher Dichte ISO-Schaumstoff DP8113 mit einer Festigkeit von 6,15 bis 9,5 kg/cm² ist.

7. Transportabler Frachtgutcontainer, gekennzeichnet durch eine trägerlose Bodenplattenkonstruktion nach Anspruch 1.

## Revendications

1. Structure de panneau de plancher sans poutres, pour conteneur de marchandises transportable, comprenant une paroi inférieure (1), disposée de façon à s'étendre sur toute la largeur du panneau de plancher, et des plaques de plancher (2) qui sont formées de feuilles extrudées et qui sont disposées au-dessus de la paroi inférieure et à une certaine distance de cette dernière de façon à délimiter un espace entre ces plaques et cette paroi, caractérisée en ce que la paroi inférieure (1) est en un matériau qui est formé d'une feuille unique pratiquement plane et qui n'est pas soutenu sur sa face opposée aux plaques de plancher et en ce qu'une mousse à densité élevée remplit complètement l'espace situé entre les plaques de plancher (2) et la paroi inférieure (1).

2. Structure de panneau de plancher suivant la revendication 1, caractérisée en ce qu'elle comprend des blocs-entretoises (3) allongés et à densité élevée qui sont disposés entre la paroi inférieure (1) et les plaques de plancher en feuille (2) de façon à soutenir ces dernières à distance de la paroi inférieure pendant le remplissage dudit espace à l'aide d'une mousse (4) à densité élevée, ces blocsentretoises divisant l'espace situé entre la paroi inférieure et les plaques de plancher en feuille extrudée en plusieurs compartiments qui sont remplis chacun séparément par injection de mousse à densité élevée.

3. Structure de panneau de plancher suivant l'une des revendications 1 et 2, caractérisée en ce que la paroi inférieure (1) est en acier inoxydable et est espacée des plaques de plancher (2) d'une distance constante à l'exception des zones des tunnels (5) pour doigt de fourche.

4. Structure de panneau de plancher suivant la revendication 3, caractérisée en ce que la paroi inférieure (1) est conformée autour des tunnels pour doigt de fourche sous la forme d'évidements à section rectangulaire destinés à recevoir des tunnels pour doigt de fourche de forme complémentaire.

5. Structure de panneau de plancher suivant l'une quelconque des revendications précédentes, caractérisée en ce que l'épaisseur de la paroi inférieure est égale ou inférieure à 1 mm.

6. Structure de panneau de plancher suivant l'une quelconque des revendications précédentes, caractérisée en ce que la mousse à densité élevée est une mousse ISO DP 8113 possédant une résistance comprise entre 6,15 et 9,5 kg/cm².

7. Conteneur de marchandises transportable, caractérisé en ce qu'il comporte une structure de panneau de plancher sans poutres suivant la revendication 1.
